# EUROPEAN PATENT APPLICATION

(11) **EP 4 566 897 A1**
(43) Date of publication of application: **11.06.2025**
(21) Application number: 23214944.3
(22) Date of filing: 07.12.2023
(51) Int. Cl.: B60S 3/04

(54) **CLEANING SYSTEM FOR A BICYCLE CASSETTE AND CHAIN**

(71) Applicant: Gearrista ApS, 7100 Vejle (DK)
(72) Inventor: Skannerup, Charlie Nicolaj, 7100 Vejle (DK); Branick, Laila, 7100 Vejle (DK)
(74) Representative: Patrade A/S

(57) **Abstract**

The present invention relates to a cleaning system (100) for cleaning the cassette and chain (C) of an associated bicycle, said cleaning system comprising: a casing (200), a brush (300) for cleaning at least the cassette and chain of the associated bicycle, said brush being rotatable in at least one direction, a motor (400), preferably a battery driven motor, and preferably with a rechargeable battery, a support structure (500), such as a frame, for holding the associated bicycle in an upright standing position, a collector (600), such as a tray, for collecting the cleaned off material, such as dust and/or oil, said collector being arranged at least substantially below the casing. Furthermore, the invention relates to a method for cleaning at least the cassette and chain of a bicycle.

## Description

### FIELD OF THE INVENTION

The present invention relates to a cleaning system for cleaning the cassette and chain of an associated bicycle, said cleaning system comprising:
- a casing, said casing comprising:
   - a brush for cleaning at least the cassette and chain of the associated bicycle, said brush being rotatable in at least one direction,
- a motor, preferably a battery driven motor, and preferably with a rechargeable battery,
- a support structure, such as a frame, for holding the associated bicycle in an upright standing position,
- a collector, such as a tray, for collecting the cleaned off material, such as dust and/or oil, said collector being arranged at least substantially below the casing,

wherein at least a part of the support structure is arranged in the casing, and
wherein at least the brush and the motor are arranged on or in connection with the part of the support structure arranged inside the casing.

Furthermore, the invention relates to a method for cleaning at least the cassette and chain of a bicycle, wherein said method comprises the steps of:
- positioning a wheel, preferably the back wheel, of a bicycle in a support structure,
- arranging a casing to at least partly enclose the wheel, and
- cleaning at least the chain and the cassette of the bicycle, said cleaning comprising:
   - starting rotation of a brush around a first axis, preferably being the center axis of the brush,
      wherein the rotation of the brush is provided by starting a motor, preferably a battery driven motor,
   - ensuring contact between the brush and the cassette and/or chain, and
   - obtaining rotation of the cassette by ensuring that sufficient friction force is made between the brush and the cassette,
- stopping the cleaning of the bicycle preferably by manually or automatically stopping the motor.

### BACKGROUND OF THE INVENTION

Within the area of cleaning bicycles, more specifically cleaning the chain and the cassette of the bicycle, the cleaning is today often performed manually and is thereby extremely troublesome, time-consuming, and requires extensive work to perform.

Alternatively, the cleaning is performed by a machine, however, the solutions of chain and cassette cleaning machines and systems known today and that are available on the market, are huge and expensive industry machines, and not small and manageable, easy and price-friendly machines. In other words, the machines known today are not for private persons.

Furthermore, all the known cleaning machines are using water and detergents to clean the chain and cassette of the bicycle. This provides both a more complicated cleaning and not least an unsustainable cleaning solution.

Hence, an improved cleaning solution, preferably an efficient and reliable cleaning solution for the chain and cassette of a bicycle would be advantageous, and in particular an optimal, sustainable, and further resilient, mechanically strong, economical, easy-to-handle and transportable cleaning solution would be advantageous.

### OBJECT OF THE INVENTION

It is an object of the present invention to provide an alternative to the prior art.

In particular, it may be seen as an object of the present invention to provide a cleaning system and a cleaning method that solves the above-mentioned problems.

### DESCRIPTION OF THE INVENTION

Thus, the above-described object and several other objects are intended to be obtained in a first aspect of the invention by providing a cleaning system for cleaning the cassette and chain of an associated bicycle, said cleaning system comprising:
- a casing, said casing comprising:
   - a brush for cleaning at least the cassette and chain of the associated bicycle, said brush being rotatable in at least one direction,
- a motor, preferably a battery driven motor, and preferably with a rechargeable battery,
- a support structure, such as a frame, for holding the associated bicycle in an upright standing position,
- a collector, such as a tray, for collecting the cleaned off material, such as dust and/or oil, said collector being arranged at least substantially below the casing,

wherein at least a part of the support structure is arranged in the casing, and
wherein at least the brush 300 is arranged on or in connection with the part of the support structure arranged inside the casing, preferably also the motor is arranged inside the casing on or in connection with the support structure.

The invention is particularly, but not exclusively, advantageous for providing a cleaning system for bicycles, which can automatically clean the cassette and chain on bicycles without the use of water and cleaning fluids.

The system performs the cleaning automatically, preferably by placing the rear wheel of a bicycle in the system, without the need of removing the rear wheel from the bicycle, instead of the cassette and chain having to be disassembled and cleaned manually.

The cleaning by the machine is a sustainable, reliable, efficient, inexpensive, optimal cleaning of a chain and cassette of a bicycle.

In addition, the cleaning system is portable and further preferably equipped with a rechargeable battery, so the cleaning can be performed anywhere. Also, the cleaning system is easy to transport.

The collector allows for collecting oil and dust particles, which the rotating brush has brushed into the collector. Thereby the system provides a cleaning without making a mess but provides very easy tidying after the cleaning of the bicycle is performed, since only the collector, such as a tray, is to be emptied.

In the context of the present invention, a "system" may also be understood as a machine, a structure, or the like.

In the context of the present invention, "casing" may also be understood as a cover, a shell, a box, or the like.

In the context of the present invention, " bicycles" may also be understood as any bicycle, such as a racer bike, road bike, a mountain bike, etc.

In the context of the present invention, " motor" may also be understood as engine or the like.

In one embodiment of the invention, the brush is shaped substantially conical or substantially conical frustum.

The embodiment is particularly, but not exclusively, advantageous for providing a brush securing the cleaning of the chain and the cassette is performed in the most optimal way, since the conical shape corresponds to the shape of the cassette.

The cleaning performed by a conical brush provides the possibility of cleaning between the blades of the cassette as well as in and around the chain by moving the brush around (preferably by a rechargeable battery-powered motor). As friction occurs between the hairs in the brush head and cassette, the chain and cassette are driven backwards, whereby a new blade or joint is constantly being cleaned.

Furthermore, the conical shape prevents the risk of damaging the chain and cassette while cleaning.

In one embodiment of the invention, the cleaning system further comprises:
- a mounting arm, and/or
- a shaft, said shaft being rotatable in at least one direction, preferably the shaft is arranged on the mounting arm,
wherein the brush is arranged on the support structure via the mounting arm and/or the shaft.

The embodiment is particularly, but not exclusively, advantageous for proving a system that is more efficient for cleaning. The mounting arm ensures the arrangement of the shaft, and the shaft ensures the arrangement of the brush being most optimal according to cleaning the chain and cassette.

In one embodiment of the invention, the brush is attachable and detachable directly or indirectly to the motor, such as indirectly via a mounting arm and/or a shaft.

The embodiment is particularly, but not exclusively, advantageous for providing a system, wherein the brush can be changed relative to the specific bicycle and the specific chain and cassette of the bicycle.

It should be understood that the system can be used to clean any kinds of bicycles. The various different bicycles comprise different chains and cassettes, therefore the most optimal and efficient brush for cleaning the different bicycles may differ.

In one embodiment of the invention, the cleaning system further comprises releasing means for detaching and/or attaching the brush, such as a button, preferably a push button.

The embodiment is particularly, but not exclusively, advantageous for providing and easily adjusting and/or replacing the brush.

In one embodiment of the invention, the motor is arranged inside the casing.

The embodiment is particularly, but not exclusively, advantageous for shielding and thereby protecting the motor from being damaged.

In one embodiment of the invention:
- the casing has an at least partly open end, and/or
- the casing comprises at least one hinge, preferably a plurality of hinges, adapted for allowing an opening function of the casing, such as a gate or door.

The embodiment is particularly, but not exclusively, advantageous for allowing a reliable cover with the possibility of opening the cover to obtain access to the inner of the casing, such as the brush, and preferably the motor.

In one embodiment of the invention, the support structure comprises at least two legs arranged outside or inside the casing and adapted for preventing the casing from tilting, and preferably wherein the at least two legs are arranged at least substantially below the casing, or in the lower part of the casing (200).

The embodiment is particularly, but not exclusively, advantageous for providing a stabile structure of the cleaning system, and thereby preventing the system and the bicycle positioned in the system from tilting, when performing the cleaning.

In one embodiment of the invention, the support structure comprises a receiving portion for receiving and holding a wheel of the bicycle, preferably wherein adjustable means are arranged in the receiving portion for securing the wheel of the associated bicycle.

In one embodiment of the invention, the receiving portion is protruding out from the casing, said receiving portion:
- preferably protrudes from the upper half part of the casing, and/or
- preferably forms at least substantially a V-shape.

The embodiment is particularly, but not exclusively, advantageous for providing a structure that easily and securely receives and holds the wheel of the bicycle.

Furthermore, when a bicycle is not positioned in the system, the protrusion provides a handle of the system, thereby providing easy transport for a person of the entire system, since it is possible to lift the machine up and carry it with one hand.

In one embodiment of the invention, the receiving portion is arranged the casing, said receiving portion.

The embodiment is particularly, but not exclusively, advantageous for providing a structure that easily and securely receives and holds the wheel of the bicycle.

In one embodiment of the invention, a handle is arranged un the upper part of the casing, preferably a foldable handle.

In one embodiment of the invention, the system further comprises a pressure spring, said pressure spring being arranged on the support structure for, when in use, ensuring that the pressure from the brush at the cassette and chain is acceptable.

In the context of the invention, "acceptable" should be understood as providing a pressure being enough to clean optimally, but also not providing too much pressure, and thereby also ensure that the chain and cassette are not injured during cleaning.

In one embodiment of the invention, the cleaning system further comprises a display, wherein said display:
- indicates the battery status,
   and/or
- provides a starting function and ending function, such as an ON/OFF function, and/or
- allows to set a time interval of the cleaning.

The embodiment is particularly, but not exclusively, advantageous for providing a cleaning system with a display. The display can provide various information, such as: battery status, time interval, ON/OFF function, WIFI availability, status of tray for collecting oil and dust particles.

With a display implemented in the system, it is sufficient to arrange the rear wheel of the bicycle in the system, and then press the time interval on the LED display to start the cleaning.

It should be understood that the display may be a Bluetooth module for connecting the system to a mobile device.

The display is thereby not necessarily directly arranged on the system.

The mobile device is being accessible for and operated by the user of the system.

In one embodiment of the invention, the cleaning system in use is adapted to:
- automatically clean at least the cassette and the chain of the bicycle, and/or
- clean at least the cassette and the chain of the bicycle without the use of water and/or detergent.

The embodiment is particularly, but not exclusively, advantageous for providing a sustainable, reliable, efficient, inexpensive, easy, and optimal cleaning of a chain and cassette of a bicycle.

In one embodiment of the invention, the bottom portion of the casing:
- comprises noise tempering and/or a vibration tempering means, and/or
- is made of noise tempering and/or a vibration tempering material.

In one embodiment of the invention, the cleaning system comprises a handle for carrying the system, preferably said handle is arranged at the upper portion of the casing.

In one embodiment of the invention, the collector is arranged on rails.

The embodiment is particularly, but not exclusively, advantageous for providing an easy access and easy emptying of the collector.

In one embodiment of the invention, the system further comprises a plug for at least connecting the battery for charging.

In a second aspect, the invention further relates to a method for cleaning at least the cassette and chain of a bicycle, wherein said method comprises the steps of:
- positioning a wheel, preferably the back wheel, of a bicycle in a support structure,
- arranging a casing to at least partly enclose the wheel, and
- cleaning at least the chain and the cassette of the bicycle, said cleaning comprising:
   - starting rotation of a brush around a first axis, preferably being the center axis of the brush,
      wherein the rotation of the brush is provided by starting a motor, preferably a battery driven motor,
   - ensuring contact between the brush and the cassette and/or chain, and
   - obtaining rotation of the cassette by ensuring that sufficient friction force is made between the brush and the cassette,
- stopping the cleaning of the bicycle preferably by manually or automatically stopping the motor,
wherein the steps of the method can be executed in any order and/or executed simultaneously.

The second aspect of the invention is particularly, but not exclusively, advantageous for providing a cleaning method for a chain and cassette of a bicycle that is a sustainable, reliable, efficient, inexpensive, easy, and optimal cleaning.

In one embodiment of the invention, the method further comprises the step of:
- setting a time for the cleaning, and/or
- choosing a cleaning program,
wherein the setting and the choosing preferably is made on a display.

In one embodiment of the invention, the method further comprises the step of:
- changing the brush,
   - preferably by pushing a releasing button, and/or
   - preferably changing the brush, such as to fit the construction of the cassette and chain arrangement of the bicycle to be cleaned,
      and/or
- emptying a collector, such as a tray, from cleaned material such as dust and/or oil,
   and/or
- charging the battery of the motor when the battery power is used.

The embodiment is particularly, but not exclusively, advantageous for ensuring the most optimal cleaning is provided.

The first and second aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Figure 1 illustrates a 3D drawing of a cleaning system and an arranged wheel.
Figure 2 illustrates a 3D drawing of a cleaning system with insight in the casing.
Figure 3 illustrates a top view of the cleaning system with a cassette.
Figure 4 illustrates a front-/back-view of the support structure and brush.
Figure 5 illustrates a 3D drawing of the support structure and brush.
Figure 6 illustrates a side-view of the support structure and brush.

### DETAILED DESCRIPTION OF THE INVENTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, oper-ations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

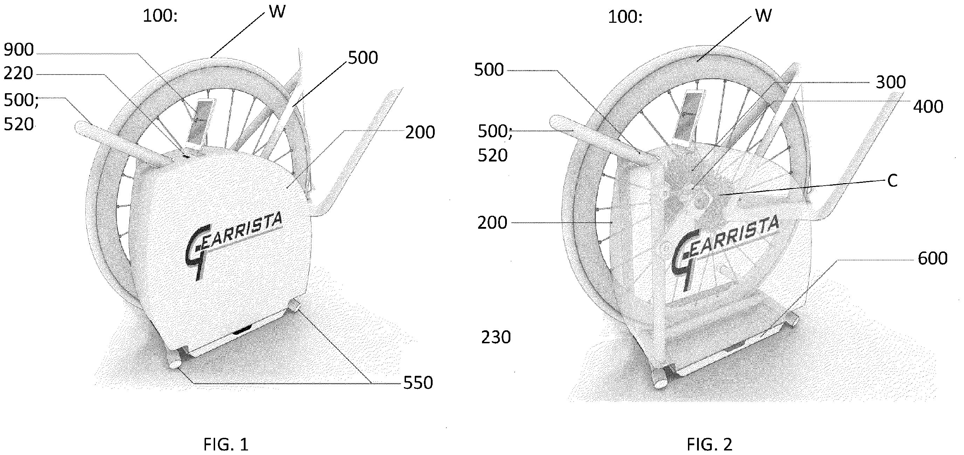

FIG. 1 illustrates a 3D drawing of a cleaning system and an arranged wheel.

FIG. 2 illustrates the same cleaning system as in FIG. 1, though with an insight through the casing.

In FIG. 1 and 2, the overall cleaning system 100 for cleaning cassette C and chain C of an associated bicycle is illustrated, said cleaning system comprising:
A casing 200, said casing comprising a brush 300 and a motor 500. Furthermore, the casing in the FIG. 1 and 2 comprises a mounting arm 700 and a shaft 800, said shaft being rotatable in at least one direction. The shaft is arranged on the mounting arm. The brush 300 is arranged on the support structure 500 via the mounting arm 700 and the shaft 800.

Within the invention, hinges are preferably also arranged on the casing, so that the casing of the system can be opened via the hinges, and thereby ensure that a gate can be tilted, such that a brush head can be replaced and/or the motor can be served/maintained.

The brush 300 for cleaning at least the cassette and chain C of the associated bicycle is rotatable in at least one direction and the brush 300 is shaped substantially conical or substantially conical frustum.

The brush 300 is replaceable and can be removed by e.g. pressing on the middle section of the shaft. A new brush can be mounted by pressing the button onto the center shaft, inserting a brush into the thread and releasing the button (not shown).

The motor 400 is preferably a battery driven motor, and preferably with a rechargeable battery. The motor 400 is arranged inside the casing 200 on the support structure 500. The motor preferably includes a battery and control module (not shown). The motor causes the brush to rotate, and the brush thereby removes dirt etc. when the brush is placed on/in the cassette and chain. The motor is battery powered, and charging takes place by connecting power to a plug or alternatively use wireless charging.

The support structure 500, such as a frame, is adapted for holding the associated bicycle in an upright standing position. The frame ensures structural integrity as well as attachment of the motor and the moving parts.

Preferably, the support structure comprises a wheel adapter, such as adjustable means (not shown), such that bicycle wheels of different sizes are kept in place - with the correct distance to motor/brush.

The collector 600, such as a tray, is collecting the cleaned off material, such as dust and/or oil, said collector being arranged at least substantially below the casing 200. The tray may be arranged on rails (not shown) and can be completely removed and cleaned.

In FIG. 1 and 2, a part of the support structure 500 is arranged in the casing 200, and the brush 300 is arranged on the part of the support structure 500 arranged inside the casing 200, via a mounting arm 700 and a shaft 800.

Moreover, a display (900) is illustrated, said display may indicate the battery status, and/or provide a starting function and ending function, such as an ON/OFF function, and/or allows to set a time interval of the cleaning.

It should be understood that the display may also be a wireless device.

Also in FIG. 1 and 2, a plug 220 for a cable is illustrated, to allow charging via the USB plug where a cable can be connected. The cable is then preferably connected to a computer, power outlet, wireless charging, or the like.

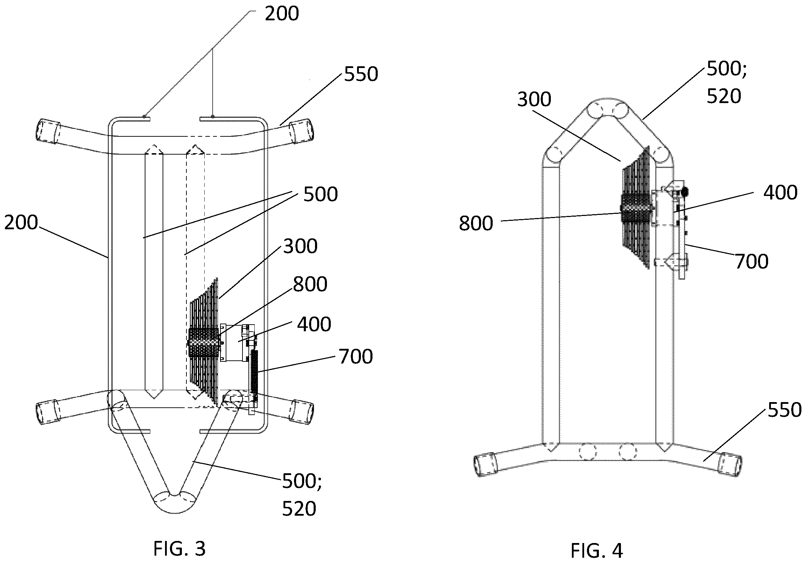

FIG. 3 illustrates a top view of the cleaning system, wherein the support structure 500 comprises at least two legs 550, in FIG. 3 four legs are illustrated, being a preferred embodiment. The legs are arranged outside the casing 200 and are adapted for preventing the casing from tilting. The legs may also be arranged inside the casing.

It should be understood that within the invention, the legs are only one embodiment for preventing the casing from tilting.

Another embodiment may be to construct the casing in a shape that is non-tiltable.

Furthermore, FIG. 3 illustrates a support structure 500 comprising a receiving portion 520 for receiving and holding a wheel (not shown) of the bicycle.

Within the invention, adjustable means (not shown) may be arranged in the receiving portion 520 for securing the wheel of the associated bicycle B.

It should be understood that within the invention, the shape of the casing 200 and the exact arrangement of the casing are not limiting to the invention.

Also, it should be understood that the shape of the support structure 500 and the exact arrangement of the support structure in and/or outside the casing is not limiting to the invention.

Further, it should be understood that the exact arrangement of the brush 300 is not limiting to the invention.

In FIG. 3, the casing is displaced relative to the center towards the side of the support structure, wherein the brush is arranged. However, the casing may also be centrally arranged.

Moreover, the receiving portion 520 is protruding out from the casing 200, and within the invention said receiving portion 520 preferably protrudes from the upper half part of the casing 200, and/or preferably forms at least substantially a V-shape, as illustrated in the figures.

FIG. 4 illustrates a front-/back-view of the same support structure and brush as illustrated in FIG. 3, though without a casing.

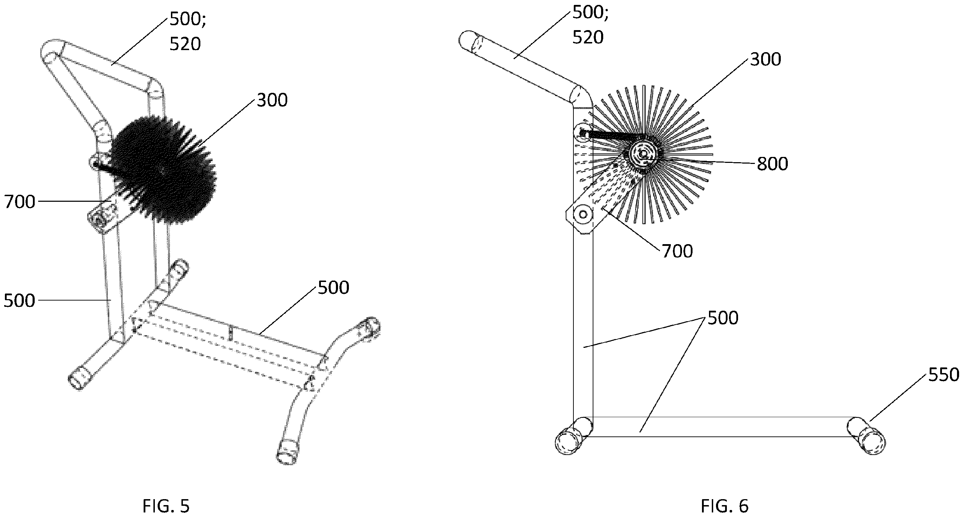

FIG. 5 illustrates a 3D drawing of the support structure and brush. Within the invention, the brush 300 is preferably attachable and detachable directly or indirectly to the motor 400. In FIG. 5, the brush is indirectly attached via a mounting arm 700 and a shaft 800.

The support structure in FIG. 5 has a bottom receiving portion for the wheel constructed of two parallel beams.

FIG. 6 illustrates a side-view of the same support structure and brush as illustrated in FIG. 5.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is possible and advantageous.

## Claims

1. A cleaning system (100) for cleaning cassette and chain (C) of an associated bicycle, said cleaning system comprising:
- a casing (200), said casing comprising:
- a brush (300) for cleaning at least the cassette and chain (C) of the associated bicycle, said brush being rotatable in at least one direction,
- a motor (400), preferably a battery driven motor, and preferably with a rechargeable battery,
- a support structure (500), such as a frame, for holding the associated bicycle in an upright standing position,
- a collector (600), such as a tray, for collecting the cleaned off material, such as dust and/or oil, said collector being arranged at least substantially below the casing (200),
wherein at least a part of the support structure (500) is arranged in the casing (200), and
wherein at least the brush (300) is arranged on or in connection with the part of the support structure (500) that is arranged inside the casing (200), preferably also the motor (400) is arranged inside the casing (200) on or in connection with the support structure (500).

2. A cleaning system (100) according to claim 1, wherein the brush (300) is shaped substantially conical or substantially conical frustum.

3. A cleaning system (100) according to any of the preceding claims, wherein the cleaning system further comprises:
- a mounting arm (700), and/or
- a shaft (800), said shaft being rotatable in at least one direction, preferably the shaft is arranged on the mounting arm (700),
wherein the brush (300) is arranged on the support structure (500) via the mounting arm (700) and/or the shaft (800).

4. A cleaning system (100) according to any of the preceding claims, wherein the brush (300) is attachable and detachable directly or indirectly to the motor (400), such as indirectly via a mounting arm (700) and/or a shaft (800).

5. A cleaning system (100) according to any of the preceding claims, wherein the cleaning system further comprises releasing means for detaching and/or attaching the brush, such as a button, preferably a push button.

6. A cleaning system (100) according to any of the preceding claims, wherein:
- the casing (200) has an at least partly open end, and/or
- the casing (200) comprises at least one hinge, preferably a plurality of hinges, adapted for allowing an opening function of the casing, such as a gate or door.

7. A cleaning system (200) according to any of the preceding claims, wherein the support structure (500) comprises at least two legs (550) arranged outside or inside the casing (200) and adapted for preventing the casing from tilting, and
Preferably wherein the at least two legs (550) are arranged at least substantially below the casing (200) or in the lower part of the casing (200).

8. A cleaning system according to any of the preceding claims, wherein the support structure (500) comprises a receiving portion (520) for receiving and holding a wheel (W) of the bicycle, preferably wherein adjustable means are arranged in the receiving portion (520) for securing the wheel of the associated bicycle (B).

9. A cleaning system (100) according to claim 8,
wherein the receiving portion (520) is protruding out from the casing (200), said receiving portion (520):
- preferably protrudes from the upper half part of the casing (200), and/or
- preferably forms at least substantially a V-shape,
or,
wherein the receiving portion (520) is arranged the casing, said receiving portion.

10. A cleaning system (100) according to any of the preceding claims, wherein the system further comprises a pressure spring, said pressure spring being arranged one the support structure for, when in use, ensuring the pressure from the brush at the cassette and chain.

11. A cleaning system (100) according to any of the preceding claims, wherein the cleaning system further comprises a display (900), wherein said display:
- indicates the battery status,
and/or
- provides a starting function and ending function, such as an ON/OFF function,
and/or
- allows to set a time interval of the cleaning.

12. A cleaning system (100) according to any of the preceding claims, wherein the cleaning system in use is adapted to:
- automatically clean at least the cassette and the chain (C) of the bicycle, and/or
- clean at least the cassette and the chain (C) of the bicycle without the use of water and/or detergent.

13. A method for cleaning at least the cassette and chain of a bicycle, preferably with a cleaning system (100) according to any of claim 1-12, wherein said method comprises the steps of:
- positioning a wheel (W), preferably the back wheel, of a bicycle in a support structure (500),
- ensuring and/or arranging a casing (200) to at least partly enclose the wheel (W), and
- cleaning at least the chain and the cassette (C) of the bicycle, said cleaning comprising:
- starting rotation of a brush (300) around a first axis, preferably being the center axis of the brush,
wherein the rotation of the brush (300) is provided by starting a motor (400), preferably a battery driven motor,
- ensuring contact between the brush (300) and the cassette and/or chain (C), and
- obtaining rotation of the cassette by ensuring sufficient friction force is made between the brush (300) and the cassette (C),
- stopping the cleaning of the bicycle preferably by manually or automatically stopping the motor (400),
wherein the steps of the method can be executed in any order and/or executed simultaneously.

14. A method for identification according to claim 13, wherein the method further comprises the step of:
- setting a time for the cleaning, and/or
- choosing a cleaning program,
wherein the setting and the choosing preferably is made on a display (900).

15. A method for identification according to claim 13-14, wherein the method further comprises the step of:
- changing the brush (300),
- preferably by pushing a releasing button, and/or
- preferably changing the brush,
and/or
- emptying a collector (600), such as a tray, from cleaned material such as dust and/or oil,
and/or
- charging the battery of the motor (400) when the battery power is used.
